Europäisches Patentamt

European Patent Office

Office européen des brevets

(11) Publication number: **0 175 242**
A2

## (12) EUROPEAN PATENT APPLICATION

(21) Application number: 85111320.9

(22) Date of filing: 07.09.85

(51) Int. Cl.⁴: **G 02 C 5/22**

(30) Priority: 12.09.84  IT 3082684 U

(43) Date of publication of application: 26.03.86
Bulletin 86/13

(84) Designated Contracting States: AT CH DE FR LI

(71) Applicant: **VISOTTICA S.p.A., Via Vecchia Trevigiana, 11,
I-31058 Susegana (Province of Treviso) (IT)**

(72) Inventor: **Montalban, Rinaldo, Via XX Settembre 75,
I-31015 Conegliano (Treviso) (IT)**

(74) Representative: **Modiano, Guido et al, MODIANO, JOSIF,
PISANTY & STAUB Modiano & Associati Via
Meravigli, 16, I-20123 Milan (IT)**

(54) **Hinge device particularly for eyeglasses.**

(57)     The hinge device comprises a structure having a base (2)
associable with a leg (3) and rigid with a box-like body (5) in-
cluding a seat for an elastic element (22) and two shoulders
(18). An "L"-like element (23) is hinged to the body (5) and is
associable with the leg of a pair of eueyeglasses. A connection
element (30) being hingedly connected to the "L"-like element
(23) and adapted to be rigidly associated with the front (31) of
a pair of eyeglasses.

"HINGE DEVICE PARTICULARLY FOR EYEGLASSES"

This invention relates to a hinge device particularly for eyeglasses.

Currently jknown are various types of hinges for hingedly connecting the side portions or legs to the lens holder or front of a pair of eyeglasses, some of which comprise a spring acting on a small plunger; others combine a ball with the spring which cooperates with a metal cam. In all cases the common objective is that of providing extra opening of the legs with respect to the front, i.e.: opening to an angle in excess of the normal opening angle of about 90° between the legs and the front, as usually employed.

Such prior hinges however, are not devoid of drawbacks, such as excessive wear of the contacting parts, which is merely attenuated by the use of very hard materials, and in all cases prior hinges are complex from the constructional standpoint.

It is a primary aim of this invention to obviate such prior problems by providing a hinge device particularly for eyeglasses which afford extra opening of the legs, with respect to the front past the usual position of use.

A further important object is to provide a hinge device which combines with the former feature with that of having a stable equilibrium position for the legs relatively to the front in the condition of non-use.

Another object is to provide a hinge device comprising parts which are subjected to little wear.

0175242

Another object is to provide a hinge device which allows for extra opening of the legs with respect to the front without altering the aesthetic and mechanical characteristics of either the legs or the front.

An important object is to provide a hinge device which can  return the leg to its normal open position of use when the extra opening feature is no longer required.

A not least object is to provide a hinge device which has optimal characteristics and is economical to manufacture.

These and other objects are achieved by an elastic hinge for eyeglasses characterized in that it comprises a structure having a base associable with a leg and rigid with a box-type body having an elastic means and at least two shoulders, to said body there being hinged a substantially L-like element, associable with leg of eyeglasses, the two shoulders and the elastic means, means being provided for connecting the eyeglasses front to the L-like element.

Further features and advantages will be apparent from the description of a preferred embodiment of the hinge device particularly for eyeglasses, as illustrated in the accompanying non-limitative drawings, where:

Figure 1 is a first three-quarter perspective view of the hinge device particularly for eyeglasses;

Figure 2 is a longitudinal sectional view of the hinge device taken on the plane II-II in Figure 1;

Figure 3 is a sectional view similar to the view of Figure 2 showing the hinge device, in the extra opened condition thereof and as connected to the front of a pair of eyeglasses and to one leg;

Figure 4 is a partly sectional view similar to the view of Figure 3, showing the position of unstable equilibrium preceding automatic return to a position of stable equilibrium;

Figure 5 is a partly sectional view similar to Figure 3, where a different type of connecting element has been used between  the hinge and the leg of the eyeglasses.

With reference to the heretofore cited drawing figures, the hinge device for eyeglasses 1 comprises a structure advantageously made of metal composed of a bas, a base 2 associable with a leg 3 of a pair of eyeglasses and made rigid with the rear wall 4 of a box-like body 5.

The gflat base 2 is of substantially parallelepipedal form extending perpendicular to the rear wall 4, and preferably has at least two throughholes 6 formed therein for the insertion of connection means 7 for securing the base 2 to the leg 3 of a pair of eyeglasses.

The box-like body 5, is radiused at a bottom surface 5a thereof to a bottom surface 2a of the base 2 by means of an inclined surface 8 defines a narrowed section 9 extending parallel to the base 2 and a step 10 having a height sdimension substantially corresponding to one half of a height dimension defined by body itself.

In the body 5 there is formed a milling 11, affecting the top surface 5b of the body 5 and extending along its longitudinal mid-axis towards the rear wall 4, said milling 11 being terminated at a plane 12, defining a steeper inclination with respect to a plane extending perpendicular to the base 2, than the inclination defined by the inclined surface 8, said milling partially affecting, both in length and width, the upper wall 13 of the body 5 and approximately one half of the height dimension of the step 10.

Thus, there are defined two parallelepipedal lateral shoulders 14 and 15, one at each side of the milling 11. Expediently, the lateral shoulders 14, 15, mutually extend towards each other from lateral surfaces 5c,5d of the body 5 and hence towards the longitudinal mid-axis thereof for a distance corresponding to approximately one fifth of a lateral extension of the wall 13, and are radiused to the step 11 by means of two consecutive radii 16 and 17 defining an S-shaped connection area.

Close to the upper corner edge 18 of each of the two shoulders there is formed, a throughgoing hole 19, at least partially threaded, wherewith a screw 20 also at least partially threaded is associable.

A cylindrical seat 21, extending perpendicular to the wall 13, is formed on the surface 12 at the bottom of the milling 11 in the body 5, for accommodating therein a cylindrical coil compression spring 22.

An element 23 of essentially L-like shape is arranged to partially fit within the milling 11 on the box-type body 5 and is hinged to the shoulders 14 and 15 by means of the screw 20, there being formed in the element 23 a throughgoing hole 24 in correspondence with the throughgoing holes 19 formed in the shoulders.

The element 23 includes a first flange 25 which is sized to fit in between the shoulders 14 and 15, and adapted to rest at an internal face 25a thereof on the spring 22, whilst its outer face 26 is, in the rest condition, level with the upper wall 13 of the body 5.

A second flange 27 extending substantially perpendicularly to said first flange rests internally at its end on the step 10; formed in the second flange is a second throughgoing hole 28, arranged offcentered with respect to a line extending perpendicularly from the wall 13 and passing through the centre of the first through hole, the second through hole vbeing adapted for accommodating a fastening screw 29, threaded for engagement with a connection 30,member 30, advantageously shaped to match the front area of the hinge and being partially embedded in the end of the front 31 of a pair of eyeglasses.

The connection member 30 includes two lugs 32 extending parallel to each other from the inner face 31a of the front 31 and being associable with the second flange 27, projecting from the front 31 itself, there being formed therein axially aligned holes 33 adapted for correspondence with the second through hole 28 for passing the fastening screw 29 therethrough.

The shape of the lugs 32 is essentially parallelepipedal, with a rounded corner edge 434a and a corner edge edge 34b.

The device hinge 1 is assembled as follows:

after inserting the spring 22 into the seat 21, the element 23 is positioned in the milling 11 with the flange 25 located between the lateral shoulders 14 and 15 of the body 5, the element 23 being hingedly connected to the same by means of the screw 20 passed through the throughgoing holes 19 in the shoulders 17,18, and the through hole 24 formed in said element. The element 23 is hinged in turn, by means of the fastening screw 29, to the matingly shaped connection member 30 present on the front 31 of the eyeglasses, the fastening screw 29 being passed through the second through hole 28 of the second flange 27, and the axially aligned holes 33 of the connection member 30,,the leg 3, is in turn associated with the base 2 through the connection means 7 and embedded therein or otherwise rigidly connected thereto.

The operation of the hinge device is as follows:

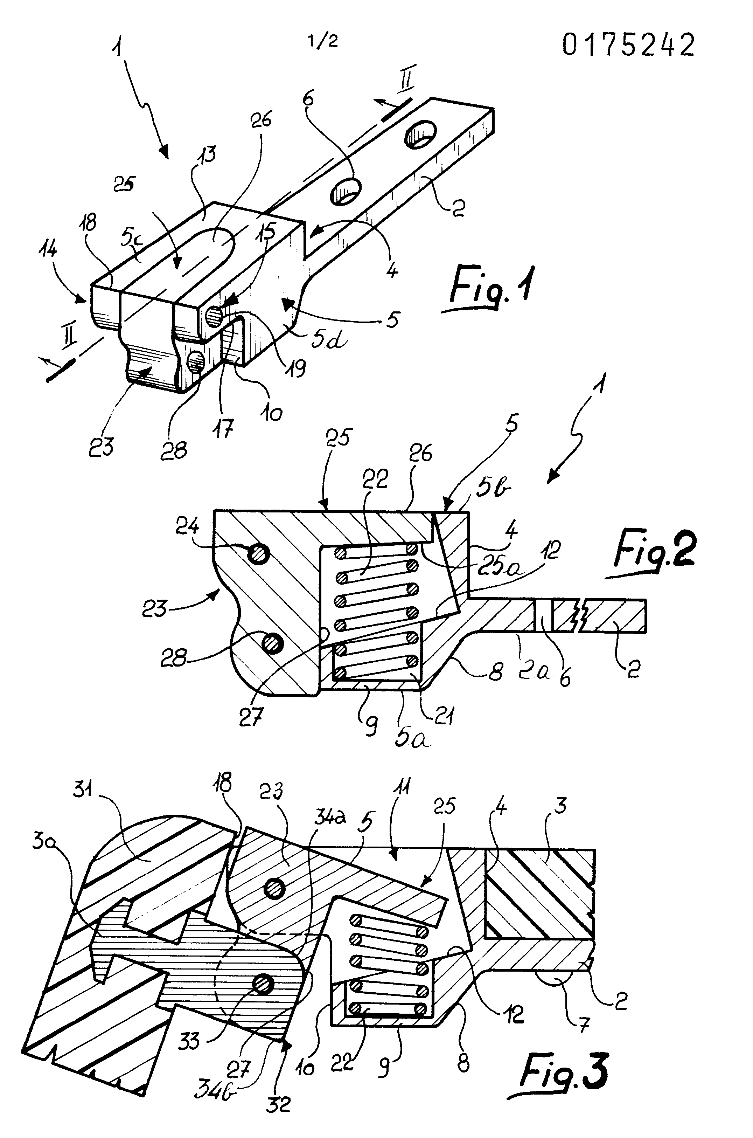

Figure 2 shows the normal in-use position, that is with the leg 3 laid at about 90° with to the front 31, the step 10 allowing the spring 22 to be unstressed.

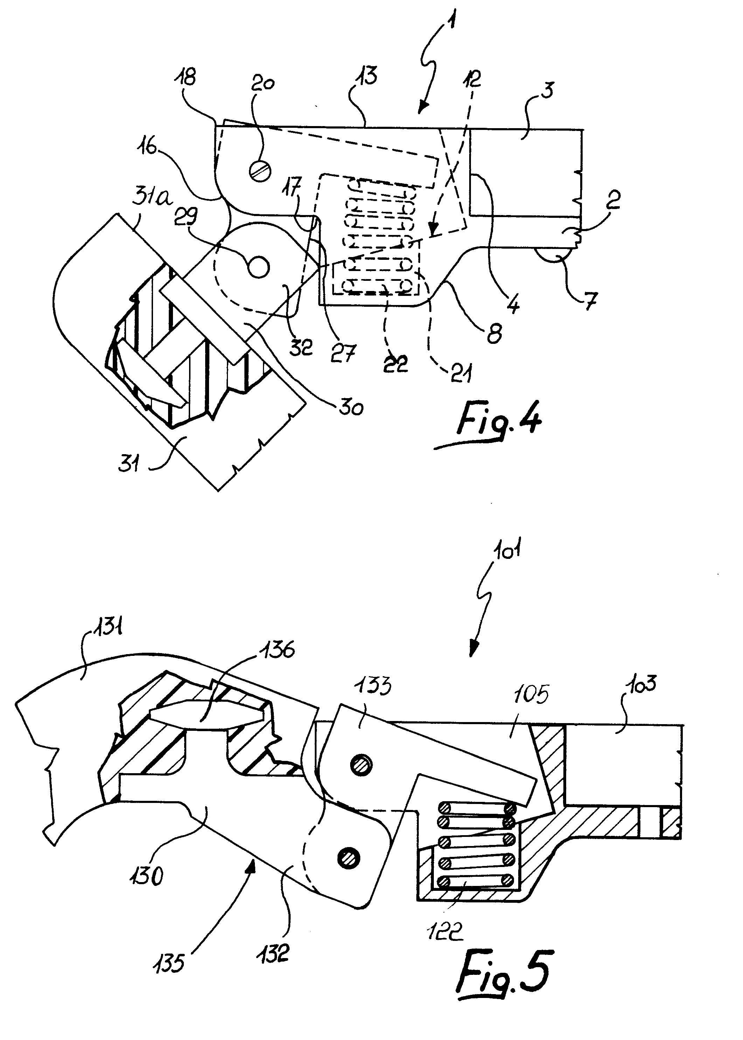

Figure 3 shows the condition of extra opening, where it may be seen that on increasing the angle between the leg and the front, the element 23 associated with the connection member 30 rigid with the front 31 compresses the spring 22 affording for the base 2, and hence the leg 3 connected to it, a rotation about the axis of the screw 20 outward with respect to the eyeglasses, the spring then acts on the inner face 25a of the flange 25 to return the leg back to the condition shown in Figure 2?

Figure 4 shows instead a phase immediately preceding snap closure of the leg 3 which brings the latter to arrange itself approximately parallel to the front 31, into a position of non-use of the eyeglasses.

In fact, if the angle of about 90° defined between the leg 3 anfand front 31 is reduced, the sharp corner edge 34b of the lugs 32 interacts with the step 10 causing the element 23 to pivot about the axis of the screw 20 and the simultaneous compression of the spring 22.

Thus, from a position of stable equilibrium (i.e.: an angle of 90° between the front and the leg) the situation changes to one of unstable equilibrium (i.e.: an angle of less than 90°).

On further desdecreasing the angle (i.e. by further turning the leg 3), the corner edge 34b of the lug 32 will move past the end of the step 10 and allow the leg to arrange itself approximately parallel to the front 31.

Figure 5 shows a variation of the element 130 associated with a front 131, while all the other parts of the hinge 101 remain unaltered, like parts having been designated with numbers increased by 100.

In the in-use condition, the angle between the extremity of the front 131 and axis of the leg 103 is nil; in order to still provide the elastic extra opening and snap closure features, while leaving the shape of the lugs 132 facing the front area of the hinge 101 unchanged, it will be necessary for them to be radiused along an inclined axis 135 to the end 136 embedded in the front.

Advantages are associated, therefore, with the simple manner of effecting the extra opening, without causing mechanical deformation of the front and legs, and with the automatic restoration of the same to their normal positions of stable equilibrium.

The snap closure further enables positioning, in a condition of stable equilibrium relatively to the front.

The wall 4 of the body 5 permits then the seat of the spring to be held isolated in the stable equilibrium condition, preventing infiltration of dirt and plastics in the istance of the leg being embedded into the base 2.

Obviously, the element 30 could be associated with the leg of a pair of eyeglasses, and the body 5 connected to the front thereof. Furthermore, the cylindrical coil spring 22 may be replaced by any appropriate elastic biasing means.

In practicing the invention, the materials used and the dimensions may be any ones, depending on requirements.

## CLAIMS

1. A hinge device particularly for eyeglasses, characterized in that it comprises a structure having a base (2) associable with a leg (3,103) and rigid with a box-type body (5,105) having an elastic means (22) and at least two shoulders (17,18), to said body (5) there being hinged a substantially L-like element (23,123), associable with the leg (3,103) of eyeglasses, the two shoulders and the elastic means (22,122) being provided for connecting the eyeglasses front (31,131) to the L-like element (33,133).

2. A hinge device particularly for eyeglasses according to claim 1, characterized in that it has a substantially parallelepipedal base (2) rigid at one end with a wall (4) of a box-like body (5) also having a substantially parallelepipedal form with a recessed step (10) on the opposite side of said body (5) to the base (2) and having a height dimension substantially corresponding to one half of a height dimension defined by the body (5) itself, at the top of the latter there being formed, along the longitudinal mid-axis, a milling (11) terminated at an inclined plane and partially spanning the thickness of the body (5) , said milling (11) defining two lateral shoulders (17,18) protruding longitudinally and extending from the body (5) and being radiused at the bottom to the step (10), in each of said shoulders (17,18) there being formed, a mutually axially aligned throughgoing hole (19).

3. A hinge device according to claims 1 and 2, characterized in that it has a cylindrical seat (21)

for an elastic men means (22,122) formed on an inclined surface (12) obtained by a milling (11) on the box-type body (5) approximately at the mid-height of the step (10), the longitudinal axis of said seat (21) being perpendicular to the longitudinal axis of the base (2).

4. A hinge device according to one or more of the preceding claims, characterized in that the L-like element '(23) is arranged to partially fit inside the milling (11) formed in the box-like body (5) and has, a first portion placed in the milling (11) made between the two shoulders (17,18), the inner surfaces (25a,27) of the ends of the first (25) and second flange (27) resting respectively on the elastic means (22,122) and the step (10), in said L-like element (23) there being also provided two  throughgoing holes (24,28), one (24) formed at the hole (19) formed on the side shoulders (17,18) and the other (28), having a parallel axis to the former, formed on the second flange (27).

5. A hinge device according to one or more of the preceding claims, comprising a means of connection (30) between the eyeglasses front and the hinge, characterized in that it has lugs (32) pivoted to the second flange (27) of the L-like element (23), having a rounded corner edge (349) and a corner edge (34b), the latter cooperating during the closing phase with the step (10) on the box-type body (5).

6. A hinge device according to claim 2, characterized in that the inclination angle of the milling (11) applied to the body (5) is such as to define a greater angle than 180° with the base (2) longitudinal axis,

7. A hinge device according to claims 2 and 6, characterized in that the milling (11) applied to the body (5) does not affect the wall (4) with which the parallelepipedic base (2) is rigid.

8. A hinge device according to claims 1 and 3, characterized in that the elastic means (22,122) comprises a cylindrical coil compression spring.

Fig.1

Fig.2

Fig.3

*Fig.4*

*Fig.5*